# EUROPÄISCHE PATENTANMELDUNG

(11) **EP 4 685 947 A1**
(43) Veröffentlichungstag der Anmeldung: **28.01.2026**
(21) Anmeldenummer: 25190889.3
(22) Anmeldetag: 22.07.2025
(51) Int. Cl.: H01M 50/204, H01M 50/227, H01M 50/249, H01M 10/6556, H01M 50/229, H01M 50/244, H01M 50/271, H01M 50/291, H01M 50/293

(54) **TRÄGERRAHMEN SOWIE BATTERIEKASTEN ZUR AUFNAHME VON BATTERIEMODULEN FÜR EIN BATTERIEELEKTRISCHES FAHRZEUG**

(30) Priorität: 23.07.2024 DE 102024120891
(71) Anmelder: AUDI AG, 85057 Ingolstadt (DE); POLYTEC PLASTICS Germany GmbH & Co. KG, 49393 Lohne (DE)
(72) Erfinder: Dr. RAUSCH, Julius, 85057 Ingolstadt (DE); EIDMANN, Florian, 85057 Ingolstadt (DE); LESON, Christoph, 59393 Lohne (DE); FISCHER, Louis, 59393 Lohne (DE)
(74) Vertreter: dompatent

(57) **Zusammenfassung**

Trägerrahmen zur Aufnahme von Batteriemodulen für ein batterieelektrisches Fahrzeug, aufweisend einen umlaufenden Rahmenkörper mit einer Rahmenoberseite und einer Rahmenunterseite zur Umgrenzung eines Rahmeninnenraums, und mindestens eine Querträgerstrebe und/oder mindestens eine Längsträgerstrebe, die innerhalb des Rahmeninnenraums angeordnet und mit dem umlaufenden Rahmenkörper lasttragend und stoffschlüssig verbunden sind zur Ausbildung einer Mehrzahl an Aufnahmefächern für Batteriemodule innerhalb des Rahmeninnenraums, wobei der Rahmenkörper zwei einander gegenüberliegende Längsseitenelemente und zwei einander gegenüberliegende Querseitenelemente aufweist, und wobei die Elemente des Rahmenkörpers und die mindestens eine Querträger- und/oder Längsträgerstrebe aus einem Kunststoffmaterial ausgebildet sind.

## Beschreibung

Die vorliegende Erfindung betrifft sowohl einen Trägerrahmen als auch einen Batteriekasten zur Aufnahme von Batteriemodulen für ein batterieelektrisches Fahrzeug.

In batterieelektrischen Fahrzeugen stellt die Gefahr des thermischen Durchgehens einzelner Batteriezellmodule und die Ausbreitung einer solchen Reaktion auf benachbarte Module ein erhebliches Sicherheitsrisiko dar. Wenn ein Batteriezellmodul aufgrund innerer Kurzschlüsse, mechanischer Beschädigungen oder einer Überhitzung in den sogenannten "thermal runaway" gerät, können extrem hohe Temperaturen und die Freisetzung von Fluiden und Feststoffen auftreten. Diese unkontrollierte exotherme Reaktion kann sich durch Wärmeleitung auf angrenzende Batteriezellmodule beispielweise innerhalb eines Batteriekastens eines batterieelektrischen Fahrzeuges übertragen und somit eine Kettenreaktion auslösen. Weiterhin können bei dem thermal runaway eines Batteriezellmoduls flüssige Elektrolyte aus der Batteriezelle austreten, welche weiterhin Kurzschlüsse in weiteren Batteriezellmodulen oder sonstigen elektrischen Komponenten auslösen können. Die daraus resultierenden Brände und Explosionen in den Batteriekästen stellen eine ernsthafte Gefahr für die Sicherheit der Fahrzeuginsassen und der Umgebung dar. Bestehende Sicherheitssysteme sind oft nicht in der Lage, diese Kettenreaktionen effektiv zu unterbinden und die freigesetzten Fluide und Feststoffe ausreichend abzuleiten. Die Risiken des thermischen Durchgehens und unkontrollierter Kettenreaktionen stellen daher eine der größten technischen Herausforderungen für die Batteriesicherheit in batterieelektrischen Fahrzeugen dar.

Ausgehend von dem vorbezeichneten Stand der Technik stellt sich die vorliegende Erfindung die Aufgabe, einen verbesserten Trägerrahmen als auch einen verbesserten Batteriekasten zur Aufnahme von Batteriemodulen, insbesondere zur Umhausung von Hochvolt-Batteriemodulen für ein batterieelektrisches Fahrzeug, bereit zu stellen, wobei die Sicherheit für den Fall eines thermischen Durchgehens einer der aufgenommenen Batteriemodule verbessert und gleichzeitig der Herstellungs- und Assemblierungsaufwand sowohl für den Trägerrahmen und/oder den Batteriekasten deutlich reduziert werden kann.

Erfindungsgemäß wird die Aufgabe gelöst gemäß einem ersten Aspekt durch einen Trägerrahmen zur Aufnahme von Batteriemodulen, insbesondere zur Aufnahme von Hochvolt-Batteriemodulen, für ein batterieelektrisches Fahrzeug.

Der erfindungsgemäße Trägerrahmen weist einen umlaufenden Rahmenkörper mit einer Rahmenoberseite und einer Rahmenunterseite zur Umgrenzung eines Rahmeninnenraumes und mindestens eine Querträgerstrebe und/oder mindestens eine Längsträgerstrebe auf, die innerhalb des Rahmeninnenraums angeordnet und mit dem umlaufenden Rahmenkörper lasttragend und stoffschlüssig verbunden ist/sind zur Ausbildung einer Mehrzahl von Aufnahmefächern für Batteriemodule innerhalb des Rahmeninnenraums. Der Rahmenkörper weist zwei einander gegenüberliegende Längsseitenelemente und zwei einander gegenüberliegende Querseitenelemente auf, wobei die Elemente des Rahmenkörpers und die mindestens eine Querträger- und/oder Längsträgerstrebe jeweils aus einem Kunststoffmaterial ausgebildet sind.

Durch die lasttragende und stoffschlüssige Verbindung der mindestens einen Quer- und/oder Längsträgerstrebe mit dem umlaufenden Rahmenkörper wird der Rahmeninnenraum in mehrere gegeneinander fluiddicht abgegrenzte Aufnahmefächer unterteilt. Erfindungsgemäß ist unter dem verwendeten Begriff der stoffschlüssigen Verbindung eine fluiddichte Fügung der bezeichneten Bauteile zu verstehen. Bei Vorsehung einer Kombination Quer- und Längsträgerstreben können die vorbezeichneten Streben sowohl mit dem Rahmenkörper als auch untereinander lasttragend und stoffschlüssig miteinander verbunden werden.

Die Aufnahmefächer dienen dabei jeweils der Aufnahme eines Batteriemoduls, insbesondere eines Hochvolt-Batteriemoduls, und zur fluiddichten Abgrenzung des jeweils aufgenommenen Batteriemoduls gegenüber weiteren aufgenommenen Batteriemodulen. Die vorbezeichnete erfindungsgemäße Ausgestaltung ist besonders vorteilhaft, da sich die in einem Aufnahmeraum ausbreitenden Fluide oder Feststoffe nicht ungehindert in die weiteren ausgebildeten Aufnahmeräume des Trägerrahmens ausbreiten können. Dies ermöglicht es erfindungsgemäß in vorteilhafter Weise, die bei einem thermischen Durchgehen eines Batteriemoduls austretenden Fluide und/oder Feststoffe zunächst auf den Bereich eines Aufnahmeraums zu begrenzen, in welchem das thermisch durchgehende Batteriemodul angeordnet ist und die austretenden Fluide und/oder Feststoffe in dem spezifischen Aufnahmeraum zunächst aufzufangen und daraus kontrolliert abzuleiten. Der erfindungsgemäße Trägerrahmen weist weiterhin den Vorteil auf, dass durch die lasttragende Verbindung der Streben mit dem umlaufenden Rahmenkörper bzw. der lasttragenden Verbindungen der Streben untereinander eine sehr steife Trägerrahmenstruktur geschaffen werden kann.

Der umlaufende Rahmenkörper kann erfindungsgemäß aus mehreren Einzelteilen gebildet werden, welche wiederum lasttragend und stoffschlüssig miteinander gefügt werden, so können insbesondere die Längsseiten und/oder die Querseitenelemente beispielsweise separat gefertigt und nachfolgend entsprechend gefügt werden. Bevorzugt ist jedoch erfindungsgemäß vorgesehen, dass der Rahmenkörper und die entsprechenden Längsseiten- und Querseitenelemente einteilig ausgebildet werden.

Weiterhin kann vorgesehen werden, dass die Elemente des Rahmenkörpers und damit die Längsseiten- und Querseitenelemente des Rahmenkörpers und die mindestens eine Quer- und/oder Längsträgerstrebe einteilig aus einem Kunststoffmaterial ausgebildet werden. Die einteilige Ausführung weist den Vorteil auf, dass der Rahmenkörper und die mindestens eine Strebe innerhalb eines Urformprozesses, wie beispielsweise in einem Spritzformprozess, als integrales Bauteil gefertigt werden kann. Hierbei kann bevorzugt der Rahmenkörper und die mindestens eine Strebe als werkzeugfallendes Bauteil hergestellt werden.

Alternativ kann es jedoch auch vorgesehen werden, dass die Elemente des Rahmenkörpers und die mindestens eine Quer- und/oder Längsträgerstrebe aus mehreren Kunststoffeinzelteilen kraftschlüssig und stoffschlüssig miteinander verbunden, gefügt und/oder verklebt werden, zur Ausbildung eines einteiligen Trägerrahmens.

Die Elemente des Rahmenkörpers und/oder die mindestens eine Quer- und/oder Längsträgerstrebe können aus einem zumindest abschnittsweise faserverstärkten Kunststoffmaterial ausgebildet werden.

Als Kunststoffmaterial kann insbesondere ein Thermoplast oder ein Duroplast vorgesehen werden. Das thermoplastische Kunststoffmaterial kann erfindungsgemäß ausgewählt werden aus mindestens einem Element aus der Gruppe von: PP, PA, PEI, PEEK, PPS, PEAK, PEKK und PC.

Es kann vorgesehen werden, dass die Verstärkungsfasern ausgewählt sind aus mindestens einem Element aus der Gruppe von Glasfasern, Aramidfasern, Carbonfasern, Basaltfasern oder hochschmelzenden Thermoplastfasern.

Erfindungsgemäß kann es auch vorgesehen werden, eine Kombination von unterschiedlichen Verstärkungsfasern in das Kunststoffmaterial einzubetten.

Unter der abschnittsweisen Faserverstärkung wird erfindungsgemäß das Einbringen von entsprechenden Fasern unmittelbar während des Herstellungsverfahrens innerhalb des Kunststoffes verstanden, wie beispielsweise eine Einbringung unmittelbar in einem Urformverfahren, wie beispielsweise im Spritzgussverfahren.

Weiterhin kann jedoch besonders bevorzugt eine entsprechende Faserverstärkung durch die lasttragende Verbindung beziehungsweise Anbindung von zusätzlichen Faserverbundschichten, wie insbesondere faserverstärkten Tapes an das dem Rahmenkörper und/oder die mindestens eine Quer- und/oder Längsträgerstrebe bildenden Kunststoffkörper vorgesehen werden. Nach einer weiteren vorteilhaften Ausführungsform können insbesondere unidirektional verstärkte Faserverbundschichten in Hauptlastrichtung vorgesehen und an den jeweiligen Kunststoffkörper lasttragend angebunden beziehungsweise mit diesem verbunden, beispielweise mit diesem verklebt oder laminiert werden.

An dem umlaufenden Rahmenkörper kann zumindest abschnittsweise an mindestens einer dem Rahmeninnenraum abgewandten Außenseite der Längsseiten- und/oder Querseitenelemente mindestens ein metallisches Verstärkungselement ausgebildet werden, welches mit der jeweiligen Außenseite der Längsseite und/oder Querseite lasttragend verbunden ist.

Erfindungsgemäß kann es vorgesehen werden, dass das mindestens eine metallische Verstärkungselement zumindest anteilig von dem Kunststoffmaterial umgeben oder zumindest teilweise darin eingebettet ist. Zur Ausbildung einer lasttragenden Verbindung kann es vorgesehen werden, dass das mindestens eine metallische Verstärkungselement mit den Längsseiten und/oder Querseitenelementen verklebt wird.

Es kann jedoch erfindungsgemäß auch vorgesehen werden, dass bei Ausbildung des Längsseiten- und/oder Querseitenelementes im Rahmen eines Urformprozesses, beispielsweise bei Ausbildung als Spritzgussteil, der Rahmenkörper zumindest anteilig an dem metallischen Verstärkungselement angespritzt oder das metallische Element umspritzt wird. Das Kunststoffmaterial, welches das Längsseiten- und/oder das Querseitenelement bildet, kann vorteilhaft im Bereich der Verbindungsfläche lokal angeschmolzen werden, zur Anbindung an das mindestens eine metallische Verstärkungselement. Hierbei können aus dem Stand der Technik bekannte Verfahren zum Schweißen von Kunststoffen oder sonstige Fügungsverfahren zur Anwendung gelangen.

Das mindestens eine metallische Verstärkungselement kann insbesondere als Hohlkammerprofil ausgebildet werden oder ein Hohlkammerprofil aufweisen, wobei eine Längsachse des Hohlkammerprofils entlang der jeweiligen Erstreckungsachse des Längsseiten- und/oder Querseitenelements angeordnet ist.

Das metallische Verstärkungselement kann derart geometrisch ausgebildet werden und/oder das Metall beziehungsweise die Metalllegierung entsprechend gewählt werden, um im Falle eines Crashes einwirkende externe Lasten aufzunehmen.

Zusätzlich kann vorgesehen werden, dass zumindest anteilig im Bereich der Verbindungsfläche zwischen dem metallischen Verstärkungselement und dem Längsseiten- und/oder Querseitenelement des Rahmenkörpers ein Haftvermittler eingebracht ist zur Verbesserung der Anbindung. Der Haftvermittler kann derart gewählt werden, dass dieser bei den Varianten mit eingelegtem Verstärkungselement im Urformprozess durch die eingebrachte Hitze aktiviert wird.

Erfindungsgemäß kann der Haftvermittler auch so gewählt werden, dass dieser Spannungen, hervorgerufen durch unterschiedliche Wärmeausdehnungskoeffizienten des vorgesehenen metallischen Verstärkungselements und des den Rahmenkörper beziehungsweise die Elemente des Rahmenkörper bildenden Kunststoffmaterials durch elastische Verformung aufnimmt oder auftretende Bauteiltoleranzen ausgleicht.

An dem umlaufenden Rahmenkörper können zumindest abschnittsweise an mindestens eine dem Rahmeninnenraum abgewandte Außenseite der Längsseiten- und/oder der Querseitenelemente zur Außenseite abstehende Versteifungsrippen ausgebildet werden. Vorzugsweise kann es erfindungsgemäß vorgesehen werden, auf Querseiten- und/oder Längsseitenelementen Versteifungsrippen auszubilden, an denen kein metallisches Verstärkungsprofil angeordnet ist.

Die mindestens eine Querträger- und/oder Längsträgerstrebe können bevorzugt einen entlang einer Erstreckungsrichtung verlaufenden Trennsteg sowie einen an einem unteren Ende des Trennsteges im Bereich der Rahmenunterseite angeordneten unteren Quersteg aufweisen zur Ausbildung eines Auflagerandes für die aufzunehmenden Batteriemodule. Der Trennsteg der Querträger- und/oder Längsträgerstrebe bildet dabei eine Wandung mit einem oberen Ende im Bereich der Rahmenoberseite und ein unteres Ende im Bereich der Rahmenunterseite. Der Auflagerand kann dabei derart ausgebildet werden, dass die aufzunehmenden Batteriemodule lasttragend mit der jeweiligen Strebe verbindbar sind, beispielsweise über eine Verschraubung und/oder über eine Verklebung.

Durch die Verklebung des Batteriemoduls mit dem Auflagerand kann bevorzugt eine fluiddichte Verbindung der aufzunehmenden Batteriemodule mit dem der jeweiligen Strebe ausgebildet werden.

Der Auflagerand kann auch derart ausgebildet werden, dass die aufzunehmenden Batteriemodule durch die Anlage bzw. Auflage auf dem Auflagerand fluiddicht mit dem Rahmen verbindbar sind, beispielsweise über am Auflagerand angeformte Dichtgeometrien, Vorsehung von Dichtmittel und/oder Festkörperdichtungen.

Die vorbezeichnete Ausgestaltungsform weist den Vorteil auf, dass der Rahmenkörper zusammen mit den Trägerstreben in Verbindung mit den Batteriemodulen von der Unterseite gesehen eine fluiddichte Barriere zu einem oberen Batteriegehäuseinnenraum beziehungsweise Rahmeninnenraum ausbildet. Die Venting-Auslässe der aufzunehmenden Batteriemodule werden dabei auf der Seite beziehungsweise in Richtung der Rahmenunterseite im Rahmeninnenraum beziehungsweise genauer in den jeweiligen Aufnahmefächern angeordnet.

Die mindestens eine Querträger- und/oder Längsträgerstrebe kann einen entlang einer Erstreckungsrichtung verlaufenden Trennsteg sowie einen an einem oberen Ende im Bereich der Rahmenoberseite angeordneten Quersteg aufweisen zur Ausbildung einer Auflager- und Befestigungsfläche für einen oberen Batteriekastendeckel.

Die mindestens eine Querträger- und/oder Längsträgerstrebe können durch die Vorsehung eines Trennsteges und/oder eines oberen und/oder unteren Quersteges erfindungsgemäß mit einem T-förmigen oder Doppel-T-förmigen Querschnittsprofil in einer Ebene orthogonal zu der jeweiligen Erstreckungsrichtung ausgebildet werden. Die unteren Querstege, welche im Bereich der Rahmenunterseite vorgesehen werden können, dienen dabei als Auflage für die aufzunehmenden Batteriemodule in Richtung der Rahmenunterseite. Die oberen Querstege, welche im Bereich der Rahmenoberseite vorgesehen werden können, dienen dabei nicht als Auflage für die jeweiligen Batteriemodule, vielmehr sind diese Querstege in der Ebene der Rahmenoberseite so ausgestaltet, dass die in den Aufnahmefächern aufzunehmenden Batteriemodule aus Richtung der Rahmenoberseite in die Aufnahmefächer jeweils eingebracht bzw. eingeschoben werden können. Die oberen Querstege stellen dabei Befestigungsflächen zur Befestigung eines oberen Batteriekastendeckels oder einer Karosseriestruktur im Bereich der Rahmenoberseite zur Verfügung, worüber der erfindungsgemäße Trägerrahmen mit dem Batteriekastendeckel oder der jeweiligen Karosseriestruktur lasttragend verbindbar ist. Weiterhin bewirken die oberen Querstege eine Erhöhung der Biegesteifigkeit der Längs- und/oder Querträgerstreben. Insbesondere dann, wenn gleichzeitig ein oberer und ein unterer Quersteg vorgesehen wird, kann die Biegesteifigkeit der jeweiligen Längs- und/oder Querträgerstreben entlang deren Erstreckungsrichtung signifikant erhöht werden.

Bevorzugt kann eine Ventileinrichtung im Bereich mindestens einer Strebe besonders bevorzugt im Bereich des Auflagerandes vorgesehen werden, um die austretenden Fluide und/oder Feststoffe aus dem jeweiligen Aufnahmeraum in einen definierten Bereich des Rahmeninnenraums abzuleiten. Durch das kontrollierte Ableiten der austretenden Fluide und/oder Feststoffe in einen spezifischen Bereich des Aufnahmeraums beziehungsweise in definierte Bereiche des Rahmeninnenraums kann somit erfindungsgemäß das Risiko des Ausbreitens des thermischen Durchgehens eines Batteriemodul auf benachbarte weitere Batteriemodulen reduziert beziehungsweise gänzlich verhindert werden, womit erfindungsgemäß die Wahrscheinlichkeit einer thermischen Kettenreaktion bzw. thermal runaways mehrerer aufgenommener Batteriemodule verhindert werden kann.

Der Rahmenkörper und/oder die mindestens eine Querträger- und/oder Längsträgerstrebe können metallische Verbindungselemente umfassen zur mechanischen Anbindung der aufzunehmenden Batteriemodule an den Trägerrahmen und/oder zur Anbindung eines oberen oder unteren Batteriekastendeckels.

Die mechanischen Verbindungselemente können zumindest teilweise in die Struktur des Rahmenkörpers und/oder der mindestens einen Querträger- und/oder Längsträgerstrebe eingebettet werden.

In mindestens einem Längsseiten- und/oder Querseitenelement kann mindestens eine erste Aussparung zur Anordnung eines Temperierungsmittelanschlusses ausgebildet werden, wobei bevorzugt in der Umgebung der mindestens einen ersten Aussparung an dem Rahmenkörper Verstärkungsrippen ausgebildet werden können.

In mindestens einem Längsseiten- und/oder Querseitenelement kann mindestens eine zweite Aussparung zur Anordnung einer Ventingeinrichtung, wie insbesondere eines Sicherheitsventils, ausgebildet werden, wobei bevorzugt in der Umgebung der mindestens einen zweiten Aussparung am Rahmenkörper Verstärkungsrippen ausgebildet werden.

An der Rahmenoberseite und/oder der Rahmenunterseite können wiederum eine umlaufende Dichtkontur oder Dichtungselemente ausgebildet werden, wobei bevorzugt an der Rahmenoberseite und/oder der Rahmenunterseite eine Nutkontur zur Einbringung eines Dichtmittels zur Ausbildung einer Dichtkontur ausgebildet ist.

Gemäß einem zweiten Aspekt betrifft die vorliegende Erfindung einen Batteriekasten zur Aufnahme von Batteriemodulen für ein batterieelektrisches Fahrzeug, aufweisend einen Trägerrahmen gemäß dem ersten Aspekt der vorliegenden Erfindung sowie einen unteren und/oder oberen Batteriekastendeckel, wobei der untere und/oder obere Batteriekastendeckel mit dem Trägerrahmen fluiddicht abdichtend verbindbar ist zur Ausbildung eines gegenüber der Umgebung abgedichteten Batteriekasteninnenraums.

Bevorzugt kann der erfindungsgemäße Batteriekasten weiterhin mindestens eine Temperiereinrichtung aufweisen zur aktiven Temperierung der in dem Batteriekasten aufgenommenen Batteriemodule, wobei die Temperiereinrichtung plattenförmig ausgebildete Kühlkörper umfasst, welche innerhalb der Aufnahmeräume anordnenbar sind und bevorzugt auf der Oberseite und/oder der Unterseite der aufgenommenen Batteriemodule aufliegend zum Abschluss des jeweiligen Aufnahmeraums in Richtung der Rahmenunter- und/oder Rahmenoberseite.

Die Kühlkörper können mit Querstegen der Querträger- und/oder Längsträgerstreben fluiddicht verbindbar ausgebildet werden.

Im Nachfolgenden werden unter Bezugnahme auf die beigefügten Figuren beispielhafte Ausführungsformen des erfindungsgemäßen Trägerrahmens zur Aufnahme von Batteriemodulen für ein batterieelektrisches Fahrzeug sowie eines erfindungsgemäßen Batteriekastens zur Aufnahme von Batteriemodulen für ein batterieelektrisches Fahrzeug dargestellt.

Es zeigen:
- Fig. 1A: eine erste beispielhafte Ausführungsform eines erfindungsgemäßen Trägerrahmens in perspektivischer und schematischer Ansicht, wobei die vorgesehenen Verstärkungselemente getrennt von dem Rahmenkörper dargestellt wurden;
- Fig. 1B: eine zweite beispielhafte Ausführungsform eines erfindungsgemäßen Trägerrahmens in schematischer und perspektivischer Ansicht, wobei die vorgesehenen metallischen Verstärkungselemente und die Haftvermittlerschichten zur verbesserten Darstellung getrennt von dem Rahmenkörper dargestellt sind;
- Fig. 2A: die erste beispielhafte Ausführungsform des Trägerrahmens gemäß Fig. 1A in vergrößerter Schnittansicht;
- Fig. 2B: die beispielhafte Ausführungsform des Trägerrahmens gemäß Fig. 1A in vergrößerter Schnittansicht und mit darin aufgenommenen Batteriemodulen und in Schnittansicht;
- Fig. 2C: die beispielhafte Ausführungsform des Trägerrahmens gemäß Fig. 1A mit darin aufgenommenen Batteriemodulen in perspektivischer schematischer Gesamtansicht; und
- Fig. 3A: eine schematische perspektivische Darstellung der Einzelelemente einer beispielhaften Ausführungsform eines erfindungsgemäßen Batteriekastens in getrennter Darstellung.

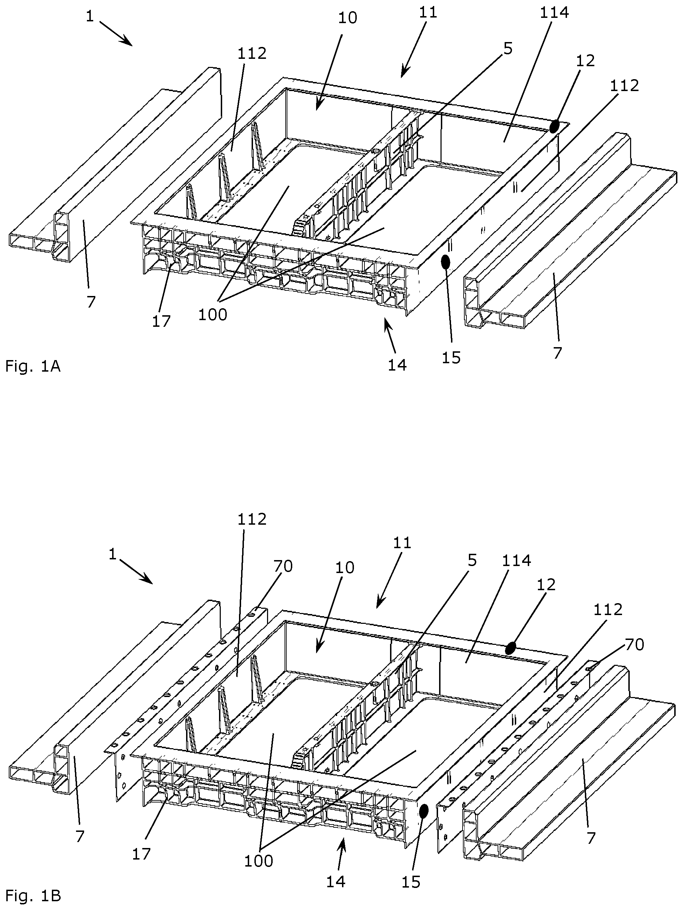

Die Fig. 1A zeigt zunächst einen erfindungsgemäßen Trägerrahmen 1 zur Aufnahme von Batteriemodulen 2, welche jedoch in der Darstellung gemäß Figuren 1A und 1B zur besseren Nachvollziehbarkeit der Merkmale des Trägerrahmens 1 nicht dargestellt sind. Der Trägerrahmen 1 weist einen umlaufenden Rahmenkörper 11 mit einer Rahmenoberseite 12 und einer der Rahmenoberseite gegenüberliegenden Rahmenunterseite 14 zur Umgrenzung eines Rahmeninnenraums 10 auf. In der dargestellten Ausführungsform umfasst der Trägerrahmen 1 weiterhin eine Längsträgerstrebe 5, welche innerhalb des Rahmeninnenraums 10 angeordnet und mit dem umlaufenden Rahmenkörper 11 lasttragend und stoffschlüssig verbunden ist zur Ausbildung von zwei Aufnahmefächern 100 für Batteriemodule 2 innerhalb des Rahmeninnenraums 10. Der Rahmenkörper 11 weist zwei einander gegenüberliegende Längsseitenelemente 112 und zwei einander gegenüberliegende Querseitenelemente 114 auf, wobei die Längsseitenelemente 112 und Querseitenelemente 114 des Rahmenkörpers und die vorgesehene Längsträgerstrebe 5 aus einem Kunststoffmaterial ausgebildet ist. Erfindungsgemäß kann es dabei vorgesehen werden, dass die Längsseitenelemente 112, die Querseitenelemente 114 und die Längsträgerstrebe 5 einstückig und stoffschlüssig aus einem Kunststoffmaterial ausgebildet sind. Anderenfalls kann es jedoch auch vorgesehen werden, dass die vorbezeichneten Elemente aus mehreren Kunststoffeinzelteilen hergestellt sind, welche stoffschlüssig miteinander verbunden bzw. gefügt und/oder verklebt werden, zur Ausbildung des einteiligen Trägerrahmens 1.

Die beispielhafte Ausführungsform gemäß Fig. 1A weist dabei an den dem Rahmeninnenraum 10 abgewandten Außenseiten 15 der Längsseitenelemente 112 jeweils ein metallisches Verstärkungselement 7 auf, welches im Bereich der jeweiligen Außenseite 15 der Längsseitenelemente 112 angeordnet ist und welches jeweils mit der Außenseite 15 der Längsseite 12 lasttragend verbunden ist. Selbstverständlich können erfindungsgemäß entsprechende metallische Verstärkungselemente 7 auch im Bereich der Querseitenelemente 114 an deren Außenseiten angeordnet und lasttragend verbunden werden. In der spezifischen Ausführungsform gemäß den Figuren 1 weisen die Querseitenelemente 114 an der dem Rahmeninnenraum 10 abgewandten Außenseite 15 zur Außenseite 15 abstehende Verstärkungs- bzw. Versteifungsrippen 17 zur Versteifung des jeweiligen Querseitenelements 114 auf, wodurch insbesondere die Biegesteifigkeit des Querseitenelements 114 gesteigert werden kann.

Die in der Fig. 1B dargestellte Ausführungsform des erfindungsgemäßen Trägerrahmens 1 unterscheidet sich von der Ausführungsform gemäß Fig. 1A darin, dass die beiden vorgesehenen metallischen Verstärkungselemente 7 mittels einer Haftvermittlerschicht 70 mit der Außenseite 15 des jeweiligen Längsseitenelements 112 lasttragend verbindbar sind. Bei der vorbezeichneten Haftvermittlerschicht 70 kann es sich beispielsweise um einen tapeförmigen Haftvermittler oder eine spezifische Schicht handeln.

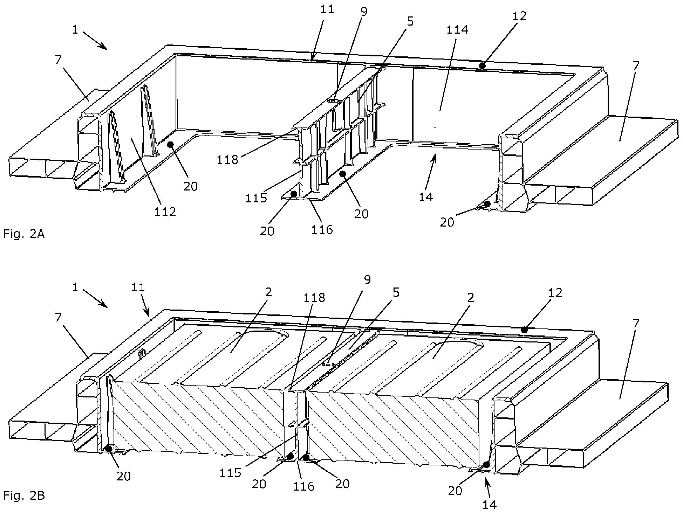

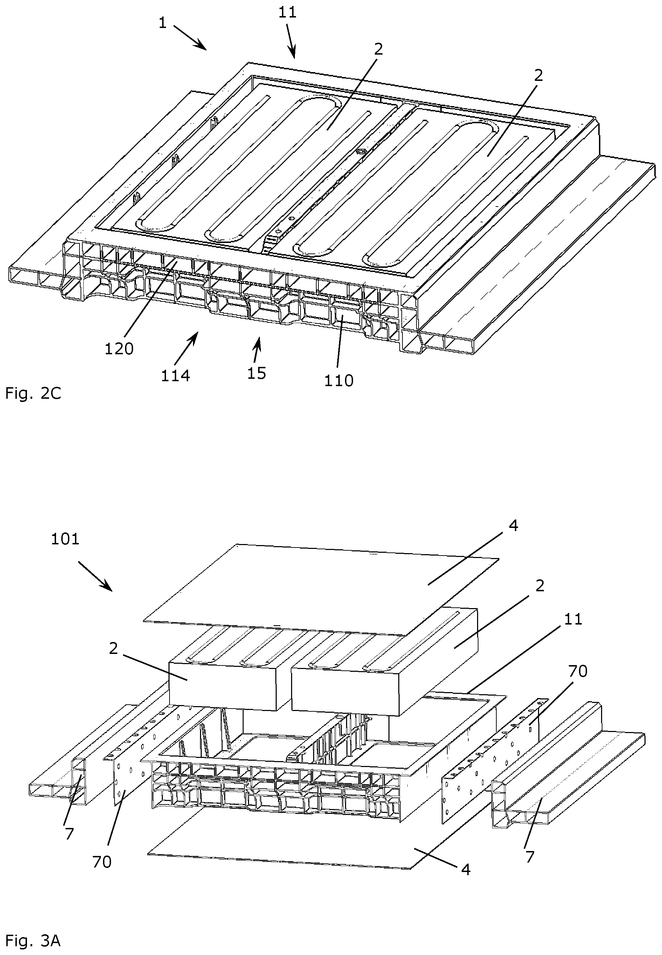

Die Fig. 2A zeigt die erfindungsgemäße Ausführungsform des Trägerrahmens 1 in vergrößerter Schnittansicht, wobei die vorgesehenen metallischen Verstärkungselemente 7 nunmehr in der mit dem Rahmenkörper 11 lasttragenden Verbindung dargestellt sind. Der Schnittdarstellung gemäß Fig. 2A lässt sich insbesondere die Ausgestaltung der vorgesehenen Längsträgerstrebe 5 entnehmen, wobei diese einen entlang der Erstreckungsrichtung der Längsträgerstrebe 5 verlaufenden Trennsteg 115 sowie einen an einem unteren Ende im Bereich der Rahmenunterseite 14 angeordneten unteren Quersteg 116 aufweist, zur Ausbildung eines Auflagerandes 20 für die aufzunehmenden Batteriemodule 2. So wie dies der Fig. 2 entnehmbar ist, können auch im Bereich der dem Rahmeninnenraum 10 zugewandten Innenwände des jeweiligen Längsseiten- und/oder Querseitenelements 112, 114 im unteren Bereich der Rahmenunterseite 14 zugewandte Auflagerrände 20 ausgebildet werden.

Der Auflagerand 20 der jeweiligen Quer- und/oder Längsträgerstrebe 3, 5 bzw. der Längsseiten- und/oder Querseitenelemente 112, 114 können dabei derart ausgestaltet werden, dass die aufzunehmenden Batteriemodule 2 fluiddicht mit dem Rahmenkörper 11 verbindbar sind, beispielsweise über am Auflagerand 20 angeformte Dichtgeometrien, Dichtmittel und/oder Festkörperdichtungen.

Weiterhin weist die dargestellte Längsträgerstrebe 5 einen an einem oberen Ende im Bereich der Rahmenoberseite 12 angeordneten oberen Quersteg 118 auf zur Ausbildung einer Auflager- und/oder Befestigungsfläche für einen oberen Batteriekastendeckel 4, welcher jedoch in den Figuren 2 nicht dargestellt ist.

Weiterhin weist die Längsträgerstrebe 5 ein metallisches Verbindungselement 9 auf zur mechanischen Anbindung der aufzunehmenden Batteriemodule an dem Trägerrahmen und/oder zur Anbindung eines Batteriekastendeckels 4 an dem Trägerrahmen 11 bzw. genauer an die Längsträgerstrebe 5.

Die Fig. 2B zeigt die erfindungsgemäße Ausführungsform gemäß Fig. 2A mit darin aufgenommenen zwei Batteriemodulen 2, wobei aus der Fig. 2B eindeutig die allseitige Auflage der Batteriemodule im Bereich der Rahmenunterseite 14 entnehmbar ist, worüber eine Abdichtung erfindungsgemäß realisiert wird.

Die Fig. 2C zeigt die beispielhafte Ausführungsform des Trägerrahmens 1 gemäß den Figuren 1A sowie 2A und 2B mit darin aufgenommenen zwei Batteriemodulen 2 in einer Gesamtansicht. Das vordere Querseitenelement 114 umfasst dabei eine erste Aussparung 110, welche zur Anordnung eines Temperierungsmittelanschlusses ausgebildet ist, und wobei bevorzugt in der Umgebung der mindestens einen Aussparung 110 am Rahmenkörper 11 zur Außenseite 15 abstehende Verstärkungsrippen ausgebildet sind. Weiterhin zeigt die Fig. 2C die Vorsehung einer zweiten Aussparung 120, die zur Anordnung einer Venting-Einrichtung ausgebildet ist, wobei ebenfalls im Bereich der Umgebung der mindestens einen zweiten Aussparung 120 am Rahmenkörper 11 wiederum zur Außenseite 15 abstehende Verstärkungsrippen ausgebildet sind.

Die Fig. 3A zeigt in Explosionsdarstellung einer beispielhafte Ausführungsform eines Batteriekastens 101 zur Aufnahme von Batteriemodulen 2 für ein batterieelektrisches Fahrzeug, wobei der Batteriekasten 101 einen erfindungsgemäßen Trägerrahmen 1, wie bereits zuvor ausgeführt, aufweist, sowie weiterhin einen unteren und oberen Batteriekastendeckel 4, wobei der untere und obere Batteriekastendeckel 4 jeweils mit dem Trägerrahmen 1 abdichtend verbindbar ist zur Ausbildung eines gegenüber der Umgebung abgedichteten Batteriekasteninnenraums, in welchen, wie in der Fig. 3A dargestellt, beispielhaft zwei Batteriemodule 2 aufnehmbar sind.

## Patentansprüche

1. Trägerrahmen (1) zur Aufnahme von Batteriemodulen (2) für ein batterieelektrisches Fahrzeug, aufweisend:
- einen umlaufenden Rahmenkörper (11) mit einer Rahmenoberseite (12) und einer Rahmenunterseite (14) zur Umgrenzung eines Rahmeninnenraums (10), und
- mindestens eine Querträgerstrebe (3) und/oder mindestens eine Längsträgerstrebe (5), die innerhalb des Rahmeninnenraums (10) angeordnet und mit dem umlaufenden Rahmenkörper (11) lasttragend und stoffschlüssig verbunden sind zur Ausbildung einer Mehrzahl an Aufnahmefächern (100) für Batteriemodule (2) innerhalb des Rahmeninnenraums (10);
wobei der Rahmenkörper (11) zwei einander gegenüberliegende Längsseitenelemente (112) und zwei einander gegenüberliegende Querseitenelemente (114) aufweist, und
wobei die Elemente (112, 114) des Rahmenkörpers (11) und die mindestens eine Querträger- und/oder Längsträgerstrebe (3, 5) aus einem Kunststoffmaterial ausgebildet sind.

2. Trägerrahmen (1) nach Anspruch 1, wobei die Elemente (112, 114) des Rahmenkörpers (11) und die mindestens eine Quer- und/oder Längsträgerstrebe (3, 5) einteilig aus einem Kunststoffmaterial ausgebildet sind.

3. Trägerrahmen (1) nach Anspruch 1, wobei die Elemente des Rahmenkörpers (112, 114) und die mindestens eine Quer- und/oder Längsträgerstrebe (3, 5) aus mehreren Kunststoffeinzelteilen stoffschlüssig miteinander verbunden, gefügt und/oder verklebt werden zur Ausbildung eines einteiligen Trägerrahmens (1).

4. Trägerrahmen (1) nach einem der Ansprüche 1 bis 3, wobei die Elemente (112, 114) des Rahmenkörpers (11) und/oder die mindestens eine Quer- und/oder Längsträgerstrebe (3, 5) aus einem zumindest abschnittsweise faserverstärkten Kunststoffmaterial ausgebildet sind.

5. Trägerrahmen (1) nach einem der vorausgehenden Ansprüche, wobei an dem umlaufenden Rahmenkörper (11) zumindest abschnittsweise an mindestens einer dem Rahmeninnenraum (10) abgewandten Außenseite (15) der Längsseiten- und/oder Querseitenelemente (112, 114) mindestens ein metallisches Verstärkungselement (7) angeordnet ist, welches mit der jeweiligen Außenseite (15) der Längsseite (112) und/oder Querseite (114) lasttragend verbunden sind.

6. Trägerrahmen (1) nach Anspruch 5, wobei das mindestens eine metallische Verstärkungselement (7) ein Hohlkammerprofil aufweist, wobei eine Längsachse des Hohlkammerprofils (7) entlang der Erstreckungsachse des jeweiligen Längsseiten- und/oder Querseitenelements (112, 114) angeordnet ist.

7. Trägerrahmen (1) nach einem der vorausgehenden Ansprüche, wobei die mindestens eine Querträger- und/oder Längsträgerstrebe (3, 5) einen entlang einer Erstreckungsrichtung verlaufenden Trennsteg (115) sowie einen an einem unteren Ende im Bereich der Rahmenunterseite (14) angeordneten unteren Quersteg (116) aufweist zur Ausbildung eines Auflagerandes (20) für die aufzunehmenden Batteriemodule (2).

8. Trägerrahmen nach Anspruch 7, wobei der Auflagerand (20) derart ausgebildet ist, dass die aufzunehmenden Batteriemodule (2) fluiddicht mit dem Rahmenkörper (11) verbindbar sind, beispielsweise über am Auflagerand (20) angeformte Dichtgeometrien, Dichtmittel und/oder Festkörperdichtungen.

9. Trägerrahmen (1) nach einem der vorausgehenden Ansprüche, wobei die mindestens eine Querträger- und/oder Längsträgerstrebe (3, 5) einen entlang einer Erstreckungsrichtung verlaufenden Trennsteg (115) sowie einen an einem oberen Ende im Bereich der Rahmenoberseite (12) angeordneten oberen Quersteg (118) aufweist zur Ausbildung einer Auflager- und Befestigungsfläche für einen oberen Batteriekastendeckel (4).

10. Trägerrahmen (1) nach einem der vorausgehenden Ansprüche, wobei in mindestens einem Längsseiten- (112) und/oder Querseitenelement (114) mindestens eine erste Aussparung (110) zur Anordnung eines Temperierungsmittelanschlusses ausgebildet ist, wobei bevorzugt in der Umgebung der mindestens einen ersten Aussparung (110) am Rahmenkörper (11) Verstärkungsrippen (17) ausgebildet sind.

11. Trägerrahmen (1) nach einem der vorausgehenden Ansprüche, wobei an der Rahmenoberseite (12) und/oder der Rahmenunterseite (14) eine umlaufende Dichtkontur ausgebildet ist, wobei bevorzugt an der Rahmenoberseite (12) und/oder Rahmenunterseite (14) eine Nutkontur zur Einbringung eines Dichtmittels zur Ausbildung der Dichtkontur ausgebildet ist.

12. Batteriekasten (101) zur Aufnahme von Batteriemodulen (2) für ein batterieelektrisches Fahrzeug, aufweisend:
- einen Trägerrahmen (1) gemäß einem der Ansprüche 1 bis 11, sowie
- einen unteren und/oder oberen Batteriekastendeckel (4);
wobei der untere und/oder obere Batteriekastendeckel (4) mit dem Trägerrahmen (1) abdichtend verbindbar sind zur Ausbildung eines gegenüber der Umgebung abgedichteten Batteriekasteninnenraums.

13. Batteriekasten (101) nach Anspruch 12, weiter aufweisend mindestens eine Temperiereinrichtung (8) zur aktiven Temperierung der in dem Batteriekasten aufgenommenen Batteriemodule (2), wobei die Temperiereinrichtung (8) plattenförmig ausgebildete Kühlkörper (81) umfasst, welche innerhalb der Aufnahmeräume (10) anordnenbar sind und bevorzugt auf der Oberseite und/oder Unterseite der aufgenommenen Batteriemodule (2) aufliegen zum Abschluss des jeweiligen Aufnahmeraums (10) in Richtung der Rahmenunterseite (12) und/oder Rahmenoberseite (14).
